# EUROPEAN PATENT APPLICATION

(11) **EP 3 708 341 A1**
(43) Date of publication of application: **16.09.2020**
(21) Application number: 19162626.6
(22) Date of filing: 13.03.2019
(51) Int. Cl.: B29C 64/393, B33Y 40/00

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Bokkes, Tobias, 96253 Untersiemau (DE); Werner, Jürgen, 96215 Lichtenfels (DE)
(74) Representative: Hafner & Kohl PartmbB

(57) **Abstract**

Apparatus (1) for additively manufacturing three-dimensional objects (2) by means of successive layerwise selective irradiation and consolidation of layers of a build material (3) which can be consolidated by means of an energy beam (6), which apparatus (1) comprises a calibration device with at least one calibration unit (10) arrangeable or arranged in a process chamber (4) of the apparatus (1), wherein the apparatus (1) comprises an irradiation device (5) adapted to generate the energy beam (6) and guide the energy beam (6) onto the calibration unit (10) arranged in the process chamber (4) and a determination device (9) adapted to determine at least one parameter of radiation (8, 8', 8") emitted from the calibration unit (10), wherein the at least one calibration unit (10) comprises a calibration base body (13) with at least two calibration portions (14, 14') arranged on the calibration base body (13), in particular in the top surface (15) of the calibration base body (13), wherein the calibration portions (14, 14') differ in at least one material parameter from the calibration base body (13).

## Description

The invention relates to an apparatus for additively manufacturing three-dimensional objects by means of successive layerwise selective irradiation and consolidation of layers of a build material which can be consolidated by means of an energy beam, which apparatus comprises a calibration device with at least one calibration unit arrangeable or arranged in a process chamber of the apparatus, wherein the apparatus comprises an irradiation device adapted to generate the energy beam and guide the energy beam onto the calibration unit arranged in the process chamber and a determination device adapted to determine at least one parameter of radiation emitted from the calibration unit.

Apparatuses for additively manufacturing three-dimensional objects, such as selective laser sintering apparatuses or selective laser melting apparatuses, are generally known from prior art. In said apparatuses an energy beam is used to selectively irradiate the build material to selectively consolidate the build material in order to build the three-dimensional object. Further, it is known from prior art that different irradiation parameters, such as a scan velocity of the energy beam, i.e. the velocity with which the energy beam is scanned across a build plane in which build material is arranged to be selectively irradiated, have to be met to fulfill predefined process requirements or object requirements, such as quality requirements.

For determining or verifying such irradiation parameters, it is known to irradiate defined patterns in a test specimen, e.g. in a calibration unit, such as a line pattern or the like, wherein the defined pattern can be irradiated several times and the irradiation time required to irradiate the pattern can be measured. Due to the defined length of the irradiated pattern and the measured irradiation time the scan velocity of the energy beam can be derived. However, this measurement may be negatively influenced, as scanner delays and deviations resulting from the (manually performed) time measurement may occur. Further, the length of the pattern varies with the distance from the energy source in that a deviation from a nominal z-position also has influence on the determination process.

It is an object of the present invention to provide an improved apparatus for additively manufacturing three-dimensional objects, wherein especially the determination of an irradiation parameter, particularly the determination of a scan velocity, is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device, as described before, which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The term "process chamber" may refer to an arbitrary volume in which the additive manufacturing process is performed. Typically, the process chamber is delimited by process chamber walls in order to separate the process chamber from the environment and vice versa. However, other setups are also feasible, in which no separation between the environment and the "process chamber" is provided, e.g. if non-reactive build materials are used or the volume surrounding the "process chamber" is also sufficiently inertized.

As described before, the invention relates to an apparatus for additively manufacturing three-dimensional objects with an irradiation device that is adapted to generate and guide an energy beam across the build plane. For the determination of the parameter of the energy beam in particular the irradiation parameter, the apparatus comprises a calibration device with a calibration unit that can be arranged or is arranged in the process chamber of the apparatus, i.e. inside the volume in which the additive manufacturing process can be performed or inside which the energy beam can be guided, respectively.

The irradiation device is provided for guiding the energy beam onto or across the calibration unit in order to determine a parameter of radiation emitted from the calibration unit. The radiation emitted from the calibration unit may either be or comprise at least one part of the energy beam that is reflected at the surface of the calibration unit or it is also possible that the radiation is at least partially emitted from the calibration unit, e.g. thermal radiation emitted due to an energy input via the energy beam. In other words, it is possible that the part of the energy beam is reflected at the calibration unit and/or that the calibration unit is heated by the energy beam and thus, emits thermal radiation.

For the determination and the analysis of the radiation that is emitted from the calibration unit, the apparatus comprises a determination device. The invention is based on the idea that the calibration unit comprises a calibration base body with at least two calibration portions arranged on the calibration base body, in particular in the top surface of the calibration base body, wherein the calibration portions differ in at least one material parameter from the calibration base body.

Thus, the calibration base body that can be arranged or is arranged in the process chamber of the apparatus comprises two calibration portions. The calibration portions may be arranged anywhere on the calibration base body in that the energy beam can be guided onto or across the calibration portions. For example, the calibration portions may be arranged in the top surface or on the top surface of the calibration base body, respectively. The calibration portions differ in at least one material parameter from the calibration base body. Thus, radiation emitted from the calibration base body and radiation emitted from the calibration portions differ in at least one radiation parameter, as, inter alia, the material of the calibration base body may comprise at least one different material parameter than the calibration portions, e.g. a mechanical, physical or chemical parameter, in particular an optical parameter, such as the reflectivity, resulting in a difference in reflection and/or absorption and/or emission of radiation compared to the calibration portions.

In other words, it is possible to determine whether the radiation detected via the determination device has been emitted from the calibration base body or a calibration portion based on the radiation parameter, e.g. the intensity, of radiation detected via the determination device. It is not necessary to arrange the calibration unit in a properly aligned position, as it is possible to distinguish between an energy beam incident on the calibration base body and an energy beam incident on the calibration portion, as the signal detected via the determination device varies dependent on the material parameter.

Thus, the energy beam can be guided across the calibration unit and across the two calibration portions arranged on the calibration base body of the calibration unit. Hence, two characteristic signals are generated via the energy beam being scanned across the calibration portions, as the material parameter of the calibration portions differs from the material parameter of the calibration base body. Therefore, it is possible to derive via the determination device the two points in time the energy beam is incident on the calibration portions, wherein the time measurement can be started and stopped with the energy beam being scanned across one of the calibration portions. With the calibration portions being arranged in defined position or the calibration portions being spaced apart from each other by a defined distance, the determination of the scanning velocity can be performed precisely.

The material parameter of the calibration portions may relate to the material of the calibration portions, wherein the material of the calibration portions at least partially differs from the material of the calibration base body. Hence, it is possible that the calibration base body is made of a first material, e.g. aluminum or steel, wherein the calibration portions are at least partially made of a different material. Besides, the material parameter may also relate to mechanical, physical or chemical parameters of the material that is used for the calibration portions and the calibration base body.

In particular, it is possible that the material of the calibration portions comprises a different physical parameter, especially optical parameter, e.g. different reflectivity than the material of the calibration base body. Hence, the radiation incident on the calibration base body is differently reflected than the same radiation incident on the calibration portions. For example, due to the different reflectivity of the calibration base body and the calibration portions, the ratio of radiation that is absorbed and the ratio of radiation that is reflected differs for the calibration base body and the calibration portions. Thus, it is possible to determine the intensity of the radiation that is reflected from the calibration unit, wherein the energy beam being scanned across the calibration unit will generate different signals, in particular different intensities of the reflected radiation, if the energy beam is incident on the calibration portions or another part of the calibration base body.

If an electron beam is used as energy beam, it is further possible to determine a radiation pattern generated by irradiating a corresponding area of the calibration unit. For example, dependent on whether the electron beam is incident on one of the at least two calibration portions or on the calibration base body, different x-ray patterns and/or different patterns of secondary electrons and/or different patterns of back scattered electrons is generated. Therefore, it is possible to determine whether and when the energy beam is incident on one of the calibration portions and on the calibration base body.

According to another embodiment of the inventive apparatus, the calibration portions may comprise recesses or holes in the calibration base body. For example, each calibration portion may be formed as a recess or a hole in the calibration base body or each calibration portion may comprise a recess or a hole in the calibration base body, e.g. in which different inserts can be arranged. Hence, by providing holes or recesses in the calibration base body, a different reflectivity and/or absorption behavior of the calibration portions compared with the rest of the calibration base body is achieved. In other words, the signals generated with the energy beam being scanned across the calibration portions and the calibration base body and detected via the determination device will differ, since the radiation is differently reflected at the calibration base body and differently absorbed at the calibration portions, as the radiation can pass through the holes or enter the recesses in the calibration base body provided by the calibration portions.

It is also possible that the holes or recesses are built as receiving sections for receiving exchangeable calibration elements, in particular calibration elements made from different materials or having different sizes. Thus, into the holes or recesses in the calibration base body different exchangeable calibration elements, in particular inserts made from different materials, can be arranged. It is also possible that holes or recesses are provided into which calibration elements having different sizes can be arranged to generate a defined height profile. For example, the surface of the calibration base body can have a different level compared to the calibration portions, wherein the calibration portions form recesses or protrusions or elevations compared to a surface of the calibration base body.

The determination device may further be adapted to determine a scan velocity of the energy beam based on the time required to guide the energy beam along a track, in particular a straight line, delimited by at least two calibration portions. Hence, the energy beam can be scanned across the calibration base body along a track, for example along a straight line, wherein the track is at least partially delimited by at least two calibration portions. For example, the two calibration portions can mark the starting point and endpoint of the track or at least of a part of the track relevant for the determination of the scan velocity. Hence, the time it takes to guide the energy beam along the track, e.g. move the energy beam across the calibration base body from one calibration portion to the other calibration portion, can be measured to determine the scan velocity. In other words, the scan velocity of the energy beam is determined based on the time required to guide the energy beam along the track and the length of the track delimited via the calibration portions.

In general, the track the energy beam is guided along can be chosen arbitrarily, wherein it is possible to guide the energy beam along a straight line. The two calibration portions can be arranged in any position along the track, for example in a starting position and an end position of the track. Further, it is possible to provide a plurality of calibration portions along the track, wherein the time required between two of those calibration portions can be determined and therefore, the scan velocity of the energy beam guided between the two calibration portions can be derived.

According to another embodiment of the inventive apparatus, at least two pairs of calibration portions may delimit two different tracks with different length. Hence, two pairs of calibration portions may be provided, wherein it is possible to have one track with two or more different track segments and multiple calibration portions, wherein each track segment is delimited by a pair of calibration portion or two completely separated tracks may be provided, wherein each track comprises a track segment delimited by a pair of calibration portions. For example, one track can be used that comprises three calibration portions, wherein a first and a second calibration portion delimit a first track segment and the second calibration portion and a third calibration portion may delimit a second track segment, wherein the first track segment and the second track segment may comprise different length. Of course, an arbitrary number of tracks with one or more track segments can be provided.

Therefore, it is possible to guide the energy beam along two different tracks with different length and thereby determine the scan velocity for different track lengths. It is also possible to provide different shapes of the track, e.g. different patterns that are delimited by the pair of calibration portions, e.g. straight tracks, curved tracks, corners, change of direction and the like.

At least two track segments may further comprise at least one track segment with the same or different orientation. Thus, it is possible to provide two tracks with track segments having different orientation or two track segments of the same track with different orientation. Thus, the track segments may extend in different orientation on the calibration base body, for example one track segment may extend essentially in x-direction and the other track segment may extend essentially in y-direction, wherein of course, the specific orientations can be chosen arbitrarily. Hence, it is possible to determine the scan velocity for different orientations and therefore, derive, whether a change in the scan velocity occurs dependent on the direction the energy beam is guided based on the orientation of the track segments.

Further, at least one track may be provided which is delimited via at least three calibration portions, wherein a first and a second calibration portion may delimit a first track segment and the second and a third calibration portion may delimit a second track segment. Of course, it is also possible that a third and a fourth calibration portion delimit the second track segment and so forth. According to this embodiment, it is possible to provide at least one track with at least three calibration portions, wherein each pair of calibration portions may delimit a specific track segment of the track. Thus, it is possible to provide a track with a plurality of track segments which can comprise different shape and/or different length and/or different orientation.

The determination device may further be adapted to determine the track, in particular the distance between at least two calibration portions, in particular optically. Hence, the track shape or the track length may be detected or determined via the determination device, wherein, inter alia, an optical determination of the track is possible. For example, the length of the track can be determined, e.g. by determining the distance between at least two calibration portions. In particular with respect to a calibration unit that comprises multiple tracks or at least one track with multiple track segments, it is possible to determine the distance between the two or more calibration portions. It is also possible to determine the orientation of each track segment and, if necessary, perform an alignment to assure that the determined track is properly oriented, e.g. with respect to a coordinate system of the irradiation device.

According to another embodiment of the inventive apparatus, the irradiation device may be used to consolidate build material for building at least two calibration portions in a powder bed. The term "powder bed" may refer to an arrangement of build material in a build plane, wherein it is possible to at least partially consolidate the build material via an irradiation of the build material with the energy beam. Hence, it is possible to generate at least two calibration portions in the powder bed, wherein the powder bed can be used as calibration base body. By selectively irradiating the build material, the material parameter of the irradiated build material can be changed compared to build material that is not irradiated. Thus, the calibration portions can be built directly in a powder bed during an additive manufacturing process.

Hence, after the calibration portions have been generated in the powder bed, the energy beam can be guided across the track or along the track delimited by the two calibration portions and the time required to guide the energy beam along the track can be determined for determining the scan velocity, for instance. In other words, it is possible to determine the scan velocity during an additive manufacturing process, as the calibration portions may be generated during the process by irradiating the build material and building the calibration portions directly in the additive manufacturing process. The consolidated build material will comprise a different material parameter than the non-consolidated build material surrounding the consolidated build material in the powder bed.

The calibration device may further comprise at least two calibration units, e.g. each having a calibration base body, wherein the different calibration units may be arranged in different positions in the process chamber, e.g. in the build plane. The two calibration units may be identical or different, especially with respect to the material, shape, size, amount and arrangement of the at least two calibration portions. Of course, it is also possible to generate the at least two calibration portions or different pairs of calibration portions in different areas in the build plane, wherein it is possible to arrange and/or generate the respective calibration units in areas in which the scan velocity of the energy beam or the parameter of the energy beam in general can be or shall be determined. Thus, it is possible to determine the parameter in different positions and/or for different regions in the process chamber in order to assure that the parameter of the energy beam is the same in every region in the build plane and that no deviations occur.

Besides, the invention relates to a calibration device for an apparatus for additively manufacturing three-dimensional objects, which calibration device comprises at least one calibration unit arrangeable or arranged in a process chamber of the apparatus, wherein the at least one calibration unit comprises a calibration base body with at least two calibration portions arranged on the calibration base body, wherein the calibration portions differ in at least one material parameter from the calibration base body.

Further, the invention relates to a method for determining a parameter of an energy beam, in particular a scan velocity of an energy beam, of an apparatus for additively manufacturing three-dimensional objects by means of successive layerwise selective irradiation and consolidation of layers of a build material which can be consolidated by means of an energy beam, which apparatus comprises a calibration device with at least one calibration unit arrangeable or arranged in a process chamber of the apparatus, wherein the apparatus comprises an irradiation device adapted to generate the energy beam and guide the energy beam onto the calibration unit arranged in the process chamber and a determination device adapted to determine at least one parameter of radiation emitted from the calibration unit, wherein the following steps are performed:
- guiding the energy beam along a track delimited by at least two calibration portions arranged on the calibration base body of the calibration unit and
- determining a scan velocity of the energy beam based on a time required to guide the energy beam along the track, in particular a straight line, delimited by the at least two calibration portions, wherein the calibration portions differ in at least one material parameter from the calibration base body.

Self-evidently, all details, features and advantages described with respect to the inventive apparatus are fully transferable to the inventive calibration device and the inventive method.

Exemplary embodiments of the invention are described with reference to the Fig. The Fig. are schematic diagrams, wherein
- Fig. 1: shows an inventive apparatus according to a first embodiment;
- Fig. 2: shows a calibration unit of the inventive apparatus according to a second embodiment;
- Fig. 3: shows a calibration unit of the inventive apparatus according to a third embodiment;
- Fig. 4: shows an inventive apparatus according to a fourth embodiment; and
- Fig. 5: shows a calibration unit of the inventive apparatus according to a fifth embodiment.

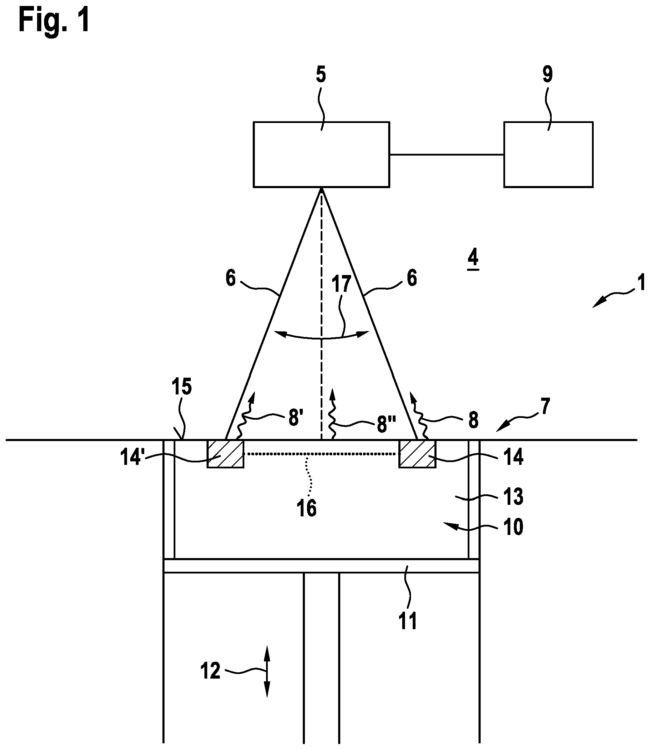

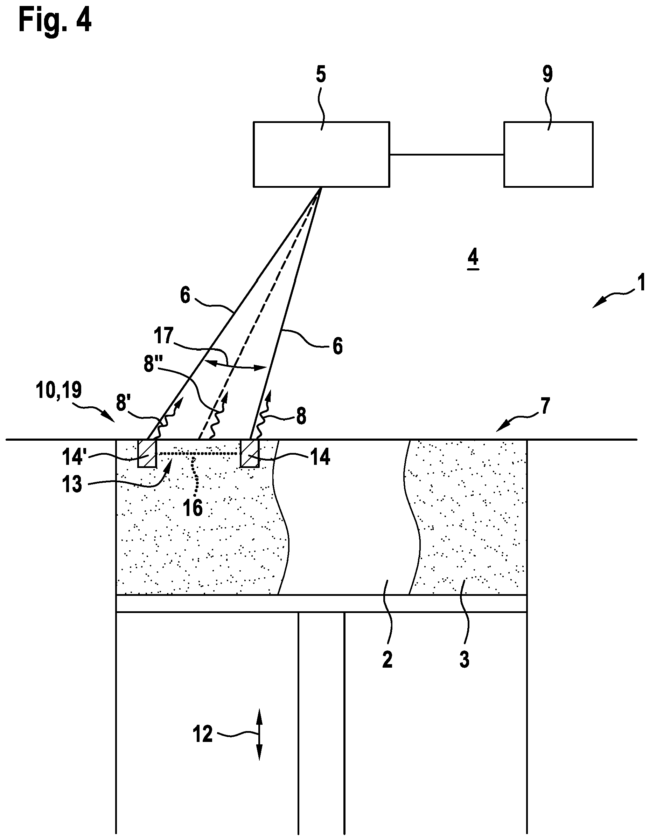

Fig. 1 shows an apparatus 1 for additively manufacturing three-dimensional objects 2 (cf. Fig. 4) by means of successive layerwise selective irradiation and consolidation of layers of a build material 3. The additive manufacturing process is performed in a process chamber 4, e.g. delimited by process chamber walls for separating the interior of the process chamber 4 against the environment and vice versa. Dependent on the build material 3, e.g. if non-reactive build material is used, a separation between process chamber 4 and environment could be omitted.

The apparatus 1 comprises an irradiation device 5 by which an energy beam 6 can be guided across a build plane 7 in which in a regular mode of operation build material 3 is arranged to be selectively irradiated to build the three-dimensional object 2. Radiation 8, 8', 8" emitted from the build plane 7 can be detected and at least one parameter of the radiation 8, 8', 8" can be determined via a determination device 9 of the apparatus 1.

In the exemplary embodiment according to Fig. 1, a calibration unit 10 of the calibration device of the apparatus 1 is arranged in the process chamber 4, in particular carried via a carrying element 11 which is height-adjustably arranged in the apparatus 1, as indicated via arrow 12. The calibration unit 10 comprises a calibration base body 13 with two calibration portions 14, 14' arranged on the calibration base body 13, for example in the top surface 15 of the calibration base body 13. The calibration portions 14, 14' differ in at least one material parameter from the material of the calibration base body 13.

For example, the calibration portions 14, 14' are made of a different material than the calibration base body 13. It is also possible that the surface of the calibration portions 14, 14' is different from the surface of the calibration base body 13, for example the surface roughness can be different. Thus, a parameter of radiation 8, 8' that is emitted from one of the calibration portions 14, 14' differs from a parameter of radiation 8" that is emitted from the calibration base body 13.

For example, the reflectivity of the calibration portions 14, 14' may significantly differ from the reflectivity of the surface 15 of the calibration base body 13. Thus, an energy beam 6 guided across the build plane 7, in particular guided across the calibration base body 13, is reflected differently at the surface 15 of the calibration base body 13 and the surfaces of the calibration portions 14, 14'. In particular, the material and the surface of the calibration portions 14, 14' can be chosen in that a part of the energy beam 6 reflected at the calibration portions 14, 14' comprises a higher (or lower) intensity than a part of the energy beam 6 reflected at the calibration base body 13. In other words, the radiation 8, 8' emitted from the calibration portions 14, 14' can have higher (or lower) intensity than radiation 8" emitted from the calibration base body 13.

Therefore, by guiding the energy beam 6 along a track across the calibration base body 13, it is possible to distinguish between the energy beam 6 being guided onto the calibration base body 13 or onto one of the calibration portions 14, 14'. Thus, the determination device 9 can determine whether the energy beam 6 is incident on the calibration base body 13 or on one of the calibration portions 14, 14'. By measuring the time required for scanning the energy beam 6 along the track delimited by the calibration portions 14, 14' across the calibration base body 13, it is possible to determine the scan velocity of the energy beam 6. A possible track 16 between the calibration portions 14, 14' is indicated via a dotted line, wherein the scanning movement is indicated via arrow 17.

Of course, the calibration portions 14, 14' may be arbitrarily arranged on the calibration base body 13. Further, a plurality of calibration portions 14, 14' can be arranged on the calibration base body 13. Additionally, the determination device 9 may be used to determine the distance the calibration portions 14, 14' are spaced away from each other or the positions in which calibration portions 14, 14' are arranged. Further, the track the energy beam 6 is guided along can be recorded via the determination device 9.

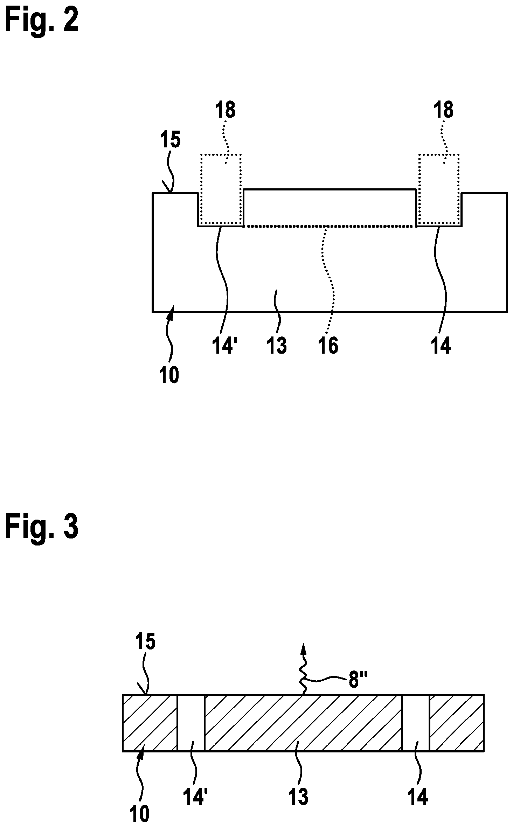

Fig. 2 shows a calibration unit 10 according to a second embodiment, wherein the calibration portions 14, 14' are formed as recesses in the surface 15 of the calibration base body 13. Of course, the calibration unit 10 according to the embodiment that is depicted in Fig. 2, can also be arranged on the carrying element 11, which can be a carrying plate, in the apparatus 1 that is depicted in Fig. 1. In this embodiment, the calibration portions 14, 14' which are built as recesses in the surface 15 can be used as receiving units for receiving exchangeable calibration elements 18 that are depicted as dotted contours. The calibration elements 18 can, inter alia be built larger or smaller than the recess or with the same size as the recess. Hence, the calibration elements 18 can form recesses, elevations or can form an even surface with the surface 15 of the calibration base body 13. The calibration elements 18 are particularly made from a different material than of the calibration base body 13. Additionally, it is possible to provide a plurality of calibration elements 18 made from different materials, wherein the calibration elements 18 are exchangeable, for example dependent on the energy beam 6 that is used in the additive manufacturing process.

In Fig. 3 a third embodiment of the calibration unit 10 is depicted, wherein the calibration base body 13 with two calibration portions 14, 14' is depicted. In the exemplary embodiment that is depicted in Fig. 3, the calibration portions 14, 14' are built as holes in the calibration base body 13. Therefore, the material parameter of the calibration portions 14, 14' and the material parameter of the calibration base body 13 differ from each other. The energy beam 6 guided to one of the calibration portions 14, 14' will be reflected differently than an energy beam 6 guided across the surface 15 of the calibration base body 13. Therefore, the determination device 9 can distinguish between the energy beam 6 being guided to the calibration portions 14, 14' and guided across the calibration base body 13, particularly because radiation 8" is only generated, if the energy beam 6 is guided across the calibration base body 13, whereas, if the energy beam 6 is guided to the calibration portions 14, 14' no radiation 8" is generated in this exemplary embodiment, as the energy beam 6 is not reflected at the surface 15. Of course, the calibration unit 10 depicted in Fig. 3 can also be used in the apparatus 1 that is depicted in Fig. 1.

Fig. 4 depicts an apparatus 1 for additively manufacturing three-dimensional objects 2 according to a fourth embodiment. In this embodiment, a powder bed 19 can be used as calibration unit 10 in the sense of the present application. In other words, the powder bed 19 can be used as calibration base body 13, wherein it is possible to generate calibration portions 14, 14' in the powder bed 19 via the energy beam 6. In other words, the energy beam 6 can be used to selectively consolidate build material 3 arranged in the build plane 7 to build the calibration portions 14, 14', wherein the material parameter of the calibration portions 14, 14' is changed due to the irradiation and thereby differs from the non-consolidated build material 3 that surrounds the calibration portions 14, 14' and forms the calibration base body 13 in this exemplary embodiment.

Thus, it is possible to build calibration portions 14, 14' during the additive manufacturing process performed on the apparatus 1, wherein the calibration portions 14, 14' may be built in a defined distance spaced away from each other, e.g. for allowing the energy beam 6 to be guided along a track 16 from one calibration portion 14 to the other calibration portion 14' or from one calibration portion 14' to the other calibration portion 14, respectively. In this exemplary embodiment, the radiation 8, 8' that is emitted from the calibration portions 14, 14' will differ from the radiation 8" that is emitted from the powder bed 19, if the energy beam 6 is incident on the non-consolidated build material 3. Of course, the calibration portions 14, 14' can be built in any arbitrary region, particularly in regions that are not used for the additive manufacturing process.

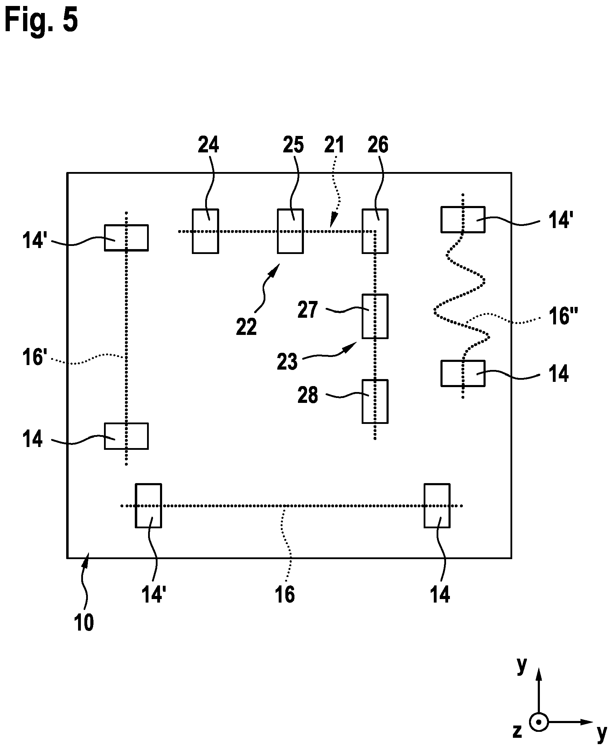

Fig. 5 shows a schematic view on an exemplary calibration unit 10, e.g. one of the calibration units 10 depicted in one of the previous embodiments. The exemplary calibration unit 10 according this fifth embodiment comprises a plurality of calibration portions 14, 14' that comprise different shape and/or different orientation. For example, a first track 16 is delimited by the calibration portions 14, 14', which first track 16 is essentially arranged in x-direction, as indicated via a coordinate system 20. A second track 16' is delimited by calibration portions 14, 14', wherein the second track 16' is essentially arranged in y-direction.

A further third track 16" is also essentially arranged in y-direction, wherein the shape of the third track 16" is curved or comprises curved track segments, respectively, and deviates from the essentially straight lines formed by the tracks 16, 16'. Further, Fig. 5 depicts a track 21 that generally comprises two track segments 22 and 23, wherein a first track segment 22 essentially extends in x-direction and the second track segment 23 essentially extends in y-direction. The track 21 is delimited by a plurality of calibration portions 24 - 28. For example, the first track segment 22 is delimited by the calibration portions 24 and 26 and the second track segment 23 is delimited by the calibration portions 26 and 28. Further, additional track segments may be formed, e.g. between the calibration portions 24 and 25, 25 and 26, 26 and 27, 27 and 28, 24 and 27, 25 and 27 and so forth.

Self-evidently, all details, features and advantages described with respect to the individual embodiments, are fully transferable. In particular, all aspects of the individual embodiments can arbitrarily be exchanged, combined and transferred.

## Claims

1. Apparatus (1) for additively manufacturing three-dimensional objects (2) by means of successive layerwise selective irradiation and consolidation of layers of a build material (3) which can be consolidated by means of an energy beam (6), which apparatus (1) comprises a calibration device with at least one calibration unit (10) arrangeable or arranged in a process chamber (4) of the apparatus (1), wherein the apparatus (1) comprises an irradiation device (5) adapted to generate the energy beam (6) and guide the energy beam (6) onto the calibration unit (10) arranged in the process chamber (4) and a determination device (9) adapted to determine at least one parameter of radiation (8, 8', 8") emitted from the calibration unit (10), **characterized in that** the at least one calibration unit (10) comprises a calibration base body (13) with at least two calibration portions (14, 14') arranged on the calibration base body (13), in particular in the top surface (15) of the calibration base body (13), wherein the calibration portions (14, 14') differ in at least one material parameter from the calibration base body (13).

2. Apparatus according to claim 1, **characterized in that** the material parameter relates to the material of the calibration portions (14, 14'), wherein the material of the calibration portions (14, 14') at least partially differs from the material of the calibration base body (13).

3. Apparatus according to one of the claims 2, **characterized in that** the material of the calibration portion (14, 14') comprises different reflectivity than the material of the calibration base body (13).

4. Apparatus according to claim 2 or 3, **characterized in that** the calibration portions (14, 14') comprise recesses or holes in the calibration base body (13).

5. Apparatus according to claim 4, **characterized in that** the holes or recesses are built as receiving sections for receiving exchangeable calibration elements (18), in particular calibration elements (18) made from different materials or having different sizes.

6. Apparatus according to one of the preceding claims, **characterized in that** the determination device (9) is adapted to determine at least one parameter, in particular an intensity, of radiation (8, 8') emitted from the calibration unit (10), in particular reflected from the calibration portions (14, 14').

7. Apparatus according to one of the preceding claims, **characterized in that** the calibration device is adapted to determine a scan velocity of the energy beam (6) based on a time required to guide the energy beam (6) along a track (16, 16', 16", 21), in particular a straight line, delimited by at least two calibration portions (14, 14').

8. Apparatus according to claim 7, **characterized in that** at least two pairs of calibration portions (14, 14') delimit two different tracks (16, 16', 16", 21) with different length.

9. Apparatus according to claim 7 or 8, **characterized in that** at least two tracks (16, 16', 16", 21) comprise at least one track segment (22, 23) with the same or different orientation.

10. Apparatus according to one of the claims 7 to 9, **characterized in that** at least one track (16, 16', 16", 21) is delimited via at least three calibration portions (14, 14'), wherein a first and a second calibration portion (14, 14') delimit a first track segment (22, 23) and the second and a third calibration portion (14, 14') delimit a second track segment (22, 23).

11. Apparatus according to one of the preceding claims, **characterized in that** the determination device (9) is adapted to determine the track (16, 16', 16", 21), in particular a distance between at least two calibration portions (14, 14'), in particular optically.

12. Apparatus according to one of the preceding claims, **characterized in that** the irradiation device (9) is adapted to consolidate build material (3) for building at least two calibration portions (14, 14') in a powder bed (19).

13. Apparatus according to one of the preceding claims, **characterized in that** the calibration device comprises at least two calibration units (10).

14. Calibration device for an apparatus (1) for additively manufacturing three-dimensional objects (2), which calibration device comprises at least one calibration unit (10) arrangeable or arranged in a process chamber (4) of the apparatus (1), **characterized in that** the at least one calibration unit (10) comprises a calibration base body (13) with at least two calibration portions (14, 14') arranged on the calibration base body (13), in particular in the top surface (15) of the calibration base body (13), wherein the calibration portions (14, 14') differ in at least one material parameter from the calibration base body (13).

15. Method for determining a scan velocity of an energy beam (6) of an apparatus (1) for additively manufacturing three-dimensional objects (2) by means of successive layerwise selective irradiation and consolidation of layers of a build material (3) which can be consolidated by means of an energy beam (6), which apparatus (1) comprises a calibration device with at least one calibration unit (10) arrangeable or arranged in a process chamber (4) of the apparatus (1), wherein the apparatus (1) comprises an irradiation device (5) adapted to generate the energy beam (6) and guide the energy beam (6) onto the calibration unit (10) arranged in the process chamber (4) and a determination device (9) adapted to determine at least one parameter of radiation (8, 8', 8") emitted from the calibration unit (10), **characterized by** guiding the energy beam (6) along a track (16, 16', 16", 21) delimited by at least two calibration portions (14, 14') arranged on the calibration base body (13), in particular in the top surface (15) of the calibration base body (13),and determining a scan velocity of the energy beam (6) based on a time required to guide the energy beam (6) along the track (16, 16', 16", 21), in particular a straight line, delimited by the at least two calibration portions (14, 14'), wherein the calibration portions (14, 14') differ in at least one material parameter from the calibration base body (13).
